# EUROPÄISCHE PATENTSCHRIFT

(11) **EP 3 710 870 B1**
(45) Veröffentlichungstag und Bekanntmachung des Hinweises auf die Patenterteilung: **14.12.2022**
(21) Anmeldenummer: 18804266.7
(22) Anmeldetag: 13.11.2018
(51) Int. Cl.: G01V 3/12, G06V 20/59, G06V 40/10, G07C 9/00

(54) **ERFASSUNGSSYSTEM**
DETECTION SYSTEM
SYSTÈME DE DÉTECTION

(30) Priorität: 13.11.2017 DE 102017126553
(43) Veröffentlichungstag der Anmeldung: 23.09.2020
(73) Patentinhaber: Iris-Gmbh Infrared & Intelligent Sensors, 12439 Berlin (DE)
(72) Erfinder: THUN-HOHENSTEIN, Andreas, 12555 Berlin (DE); NOACK, Thomas, 12487 Berlin (DE); REIMANN, Axel, 16341 Panketal (DE); HAUN, Stefan, 39104 Magdeburg (DE); HAUFE, Paul, 10439 Berlin (DE)
(74) Vertreter: Eisenführ Speiser
(86) Internationale Anmeldenummer: PCT/EP2018/081096
(87) Internationale Veröffentlichungsnummer: WO 2019/092277

(56) Entgegenhaltungen:
- EP-A2- 0 561 071
- DE-A1-102015 202 223
- DE-A1-102015 202 232

## Beschreibung

Die Erfindung betrifft ein Erfassungssystem zum Klassifizieren eines Objekts. Weiterhin betrifft die Erfindung ein Berechtigungsprüfsystem und ein Verfahren zum Betreiben eines Erfassungssystems.

Aus dem Stand der Technik sind Systeme zur Datenerfassung im öffentlichen Nahverkehr bekannt, die beispielsweise ausgebildet sind, gültige Fahrscheine zu erkennen und ein diesbezügliches Signal auszugeben. Weiterhin sind Sensoranordnungen zum Erfassen einer Objektstruktur, beispielsweise im Rahmen einer Gesichtserkennung bekannt.

EP 1224632 B1 beschreibt eine Erfassungsvorrichtung zum Erfassen von Personen oder Objekten und deren Bewegungsrichtung, mit einer Sensoranordnung zum Erfassen von elektromagnetischer Strahlung mit der Wellenlänge sichtbaren und/oder unsichtbaren Lichtes, die von einer Person oder einem Objekt reflektiert oder abgestrahlt wird. Weiterhin weist die Erfassungsvorrichtung eine Auswerteeinheit auf, die mit der Sensoranordnung verbunden und ausgebildet ist, aus der von der Strahlungssensoranordnung erfassten Strahlung ein Signal abzuleiten und ein Erfassungssignal für möglichst jedes von der Strahlungssensoranordnung erfasste Objekt oder jede Person abzugeben.

Die Offenbarungsschrift EP 0 561 071 beschreibt ein Erfassungssystem zum Klassifizieren eines Objekts mit einer Sensoreinheit, einer Strahlungsquelle zum Abgeben elektromagnetischer Strahlung sowie einer Sensoranordnung zum Detektieren von vom Objekt reflektierter Strahlung. Sie offenbart ebenfalls eine Auswerteeinheit, die mit der Sensoreinheit verbunden und ausgebildet ist, aus der von der Sensoranordnung detektierten Strahlung eine zeitlich geordnete Folge von Strukturdatensätzen des zu erfassenden Objekts zu bestimmen sowie eine Speichereinheit, die ausgebildet ist eine Anzahl von Zuordnungsregeln, die jeweils einem Satz vorbestimmter Situationssparameter zugeordnet sind, zu speichern. Weiterhin beschreibt die Offenbarungsschrift eine Datenverarbeitungseinheit, die mit der Speichereinheit verbunden ist und die ausgebildet ist eine Zählerinformation auszugeben, die anzeigt, dass das Erfassungssystem ein Objekt der ermittelten Objektklasse erfasst hat.

Aufgabe der vorliegenden Erfindung ist es, ein verbessertes Erfassungssystem zum Klassifizieren eines Objekts bereitzustellen.

Zur Lösung dieser Aufgabe wird gemäß einem ersten Aspekt der Erfindung ein Erfassungssystem zum Klassifizieren eines Objekts vorgeschlagen, dass eine Sensoreinheit, eine Auswerteeinheit, eine Speichereinheit, eine Datenverarbeitungseinheit und eine Analyseeinheit aufweist.

Teil der Sensoreinheit ist eine Strahlungsquelle zum Abgeben elektromagnetischer Strahlung und eine Sensoranordnung, die ausgebildet ist, von einem Objekt im Erfassungsbereich der Sensoreinheit ausgehende, beispielsweise reflektierte, Strahlung zu detektieren.

Die Auswerteeinheit ist mit der Sensoreinheit verbunden und ausgebildet, aus der von der Sensoranordnung detektierten Strahlung eine zeitlich geordnete Folge von Strukturdatensätzen des aktuell erfassten Objekts zu bestimmen. Ein Strukturdatensatz umfasst Daten, die eine Struktur des aktuell erfassten Objekts charakterisieren. Vorzugsweise spiegelt ein Strukturdatensatz dreidimensionale Bilder wieder. Die Sensoreinheit arbeitet vorzugsweise nach dem Time-of-Flight (ToF) Prinzip, um dreidimensionale Bilder zu erfassen. Ein jeweiliges dreidimensionales Bild ist durch eine Punktwolke repräsentiert, in der jeder Punkt einen Abstand zwischen Sensoreinheit und Objekt in- von der Sensoreinheit aus gesehen - verschiedenen Richtungen repräsentiert. Dementsprechend kann ein Strukturdatensatz die Form einer Matrix oder einer geordneten Wertefolge haben, die die jeweilige Punktwolke repräsentiert.

Eine Punktwolke gibt dabei jeweils eine Momentaufnahme wieder, d. h. die von der Sensoreinheit aufgenommenen Punktwolken ändern sich im Laufe der Zeit, z. B. wenn sich das erfasste Objekt bewegt.

Die Speichereinheit ist ausgebildet, eine Anzahl von Zuordnungsregeln, die jeweils einem Situationsparameter aus einem Satz vorbestimmter Situationsparameter zugeordnet sind, zu speichern. Unter einem Situationsparameter ist hierbei ein Wert oder einer Vielzahl von Werten zu verstehen, die eine aktuell vorliegende Situation, vorzugsweise einen örtlichen oder zeitlichen Zustand des Erfassungssystems kennzeichnet. Die dem Situationsparameter zugeordnete Zuordnungsregel gibt an, wie anhand des bestimmten Strukturdatensatzes dem erfassten Objekt eine Objektklasse zugeordnet wird. "Zuordnungsregel" wird hier als übergeordneter Begriff für jegliches Zuordnungsverfahren verstanden.

Die Datenverarbeitungseinheit ist mit der Speichereinheit verbunden und ist ausgebildet, auf den Strukturdatensatz und einen aktuellen Situationsparameter sowie auf eine dem aktuellen Situationsparametersatz in der Speichereinheit zugeordnete Zuordnungsregel zuzugreifen und dem Objekt auf Basis des Strukturdatensatzes unter Anwendung einer dem aktuellen Situationsparameter zugeordneten Zuordnungsregel, eine Objektklasse zuzuordnen. Die Objektklasse ist aus einer Gruppe von Objektklassen ausgewählt, die zumindest eine Unterscheidung ermöglicht, ob das Objekt eine Person ist oder nicht. Weiterhin ist die Datenverarbeitungseinheit vorzugsweise dazu ausgebildet, eine Zählerinformation auszugeben, die das Vorliegen eines Objekts der ermittelten Objektklasse anzeigt.

Die Datenverarbeitungseinheit erfasst somit Objekte, die Strahlung reflektieren wobei die reflektierte Strahlung jeweils einen Strukturdatensatz liefert, der das jeweilige Objekt repräsentiert. Auf Basis des jeweiligen Strukturdatensatzes und unter Anwendung der Zuordnungsregeln wird das jeweilige Objekt einer Objektklasse zugeordnet, so dass die Datenverarbeitungseinheit viele Objekte einer jeweiligen Objektklasse im Laufe der Zeit - z.B. der Öffnungszeit der Türen eines Fahrzeugs - erfasst. Dadurch, dass die Zuordnungsegeln situationsabhängig sind, können sie genauere Auftritts-wahrscheinlichkeiten für die Objekte der unterschiedlichen Objektklassen - z.B. erwachsene Personen, Kinder, Fahrräder, Kinderwagen, Rollstühle etc. - widerspiegeln und entsprechend genauere Zuordnungswahrscheinlichkeiten enthalten. Dies erlaubt eine genauere oder treffsicherere Zuordnung der erfassten Objekte zu Objektklassen und damit z.B. eine genauere Fahrgast- oder Objektzählung.

Der Erfindung liegt die Erkenntnis zugrunde, dass für die Ermittlung seltener Objekte, wie beispielsweise Fahrräder oder Rollstühle innerhalb eines öffentlichen Verkehrsmittels, eine besonders hohe Präzision der Erfassungsvorrichtung notwendig ist, damit die geringe Auftrittswahrscheinlichkeit derartiger Objekte nicht innerhalb der Fehlerquote der Erfassungsvorrichtung liegt. Zur Umsetzung einer besonders präzisen Ermittlung der Objektklasse wird erfindungsgemäß eine Zuordnungsregel vorgeschlagen, die auf Situationsparameter abgestimmt ist und dadurch Besonderheiten einer momentanen Situation des Erfassungssystems berücksichtigt.

Hierdurch kann eine jeweilige Situation, die von dem Erfassungssystem erfasst wird, wie beispielsweise Ort oder Zeitpunkt der Erfassung, für die Ermittlung der Objektklasse des Objekts genutzt werden. Dies ist insbesondere dadurch vorteilhaft, dass typische zu erfassende Objekte, zu bestimmten Zeiten oder an bestimmten Orten mit unterschiedlicher Wahrscheinlichkeit auftreten und von der Sensoreinheit das Erfassungssystem erfasst werden. So werden im Sommer deutlich mehr Fahrradfahrer mit einem Fahrrad als zu erfassendem Objekt eine Bahn nutzen als im Winter und Kinderwägen werden zur Mittagszeit deutlich häufiger in einem Bus zu erfassen sein als in der Nacht. In diesen beiden Beispielen sind die Jahreszeit und die Tageszeit jeweils die aktuellen Situationsparameter des Erfassungssystems. Anstatt einer Gesamtwahrscheinlichkeit für das Ermitteln eines bestimmten zu erfassenden Objekts zu nutzen, ist es daher vorteilhaft eine von der Situation, beispielsweise Zeit und/oder Ort abhängige Wahrscheinlichkeit für die Zuordnungsregel zu verwenden. Eine solche bedingte Wahrscheinlichkeit gibt dabei die Wahrscheinlichkeit für das Auftreten eines bestimmten zu erfassenden Objekts in Abhängigkeit von einer jeweiligen vom Situationsparameter repräsentierten Situation an.

Der Situationsparameter kennzeichnet eine aktuell vorliegende Situation des Erfassungssystems, wie beispielsweise: eine aktuelle Haltestelle eines Busses, in dem die Sensoreinheit angeordnet ist; eine aktuell vorliegende Uhrzeit; eine aktuell vorliegende Jahreszeit; ein aktuell vorliegender Wochentag; eine Eingangsinformation, die einen Eingang kennzeichnet, an dem die Sensoreinheit aktuell angeordnet ist, wie beispielsweise ein Rollstuhl-freundlicher Eingang oder ein Eingang eines Fahrradabteils; eine Busnummer des Busses, in dem die Sensoreinheit aktuell genutzt wird; ein aktuelles Vorliegen eines einseitigen Absenken des Busses, in dem die Sensoreinheit angeordnet ist, auf einer Einstiegsseite des Busses. Der Situationsparameter kann dabei einen Wert oder eine Vielzahl von Werten umfassen. So kann der Situationsparameter ein Vektor sein, der sich aus einer Vielzahl von Werten zusammensetzt, die die aktuell vorliegende Situation des Erfassungssystems kennzeichnen.

Die Zuordnungsregel hängt typischerweise von der jeweiligen, durch den Situationsparameter widergespiegelten Situation ab. Die Zuordnungsregel kann beispielsweise Zuordnungswahrscheinlichkeiten für Personen oder andere Objekte enthalten, über die die Zuordnung einer jeweils erfassten Person oder eines erfassten Objektes zu einer der Objektklassen berücksichtigt werden. Eine solche, die Wahrscheinlichkeit eines Auftretens eines Objektes oder einer Person, berücksichtigende Klassifikationen von Personen und Objekten ist grundsätzlich bekannt. Dadurch, dass die Zuordnungsregel durch die jeweilige Zuordnung zu einem Situationsparameter für verschiedene Situationen unterschiedlich vorgegeben werden, können insbesondere für verschiedene Situationen unterschiedliche Auftrittswahrscheinlichkeiten für die einzelnen potenziell zu erfassenden Objekte berücksichtigt werden.

Eine Gruppe von Objektklassen enthält mehrere Objektklassen, beispielsweise zwei Objektklassen. Eine jeweilige Objektklasse ist so gestaltet, dass sie zumindest anzeigt, ob das zu erfassende Objekt eine Person ist, oder ob es sich dabei um einen anders strukturierten Körper, wie beispielsweise ein Fahrrad, einen Rollstuhl oder einen Kinderwagen handelt. Beispielsweise kann die Gruppe von Objektklassen zwei Objektklassen umfassen, nämlich eine erste Objektklasse für Personen und eine zweite Objektklasse für Nicht-Personen. Eine Auswahl möglicher Objektklassen wird in verschiedenen Ausführungsformen nachfolgend beschrieben, wobei die Objektklasse jedoch stets zumindest den Schluss zulässt, ob das zu erfassende Objekt eine Person ist oder nicht. Die Objektklassen aus der Gruppe von Objektklassen sind typischerweise derart vorbestimmt, dass kein Objekt zwei Objektklassen angehört.

Die Zählerinformation zeigt typischerweise einen Anstieg der Anzahl von gemessenen Objekten der ermittelten Objektklasse um 1 an.

Nachfolgend werden Ausführungsformen des erfindungsgemäßen Erfassungssystems beschrieben.

In einer besonders bevorzugten Ausführungsform weist das Erfassungssystem eine Analyseeinheit auf, die mit der Datenverarbeitungseinheit und der Speichereinheit verbunden ist. Die Analyseeinheit ist ausgebildet, auf den aktuellen Situationsparameter und die Zählerinformation zuzugreifen und abhängig von dem aktuellen Situationsparameter und der Zählerinformation eine Anpassung der dem Situationsparameter zugeordneten Zuordnungsregel in der Speichereinheit auszulösen. Beispielsweise kann sich aus den jeweils aktuellen Zählerinformationen zu einer jeweiligen, durch den Situationsparameter repräsentierten Situation ergeben, dass die Zuordnungsregel beziehungsweise die einer Zuordnungsregel zugrundeliegende Auftrittswahrscheinlichkeit für ein einzelnes zu erfassendes Objekte nicht aktuell ist. Dies kann von der Analyseeinheit erfasst werden. Daraufhin kann die Analyseeinheit die Zuordnungsregeln beispielsweise durch Anpassen, der den Zuordnungsregeln zugrundeliegenden Auftrittswahrscheinlichkeiten, an die aktuellen Gegebenheiten anpassen, so dass die jeweiligen Zuordnungsregeln für ein zukünftiges Erfassen eines Objekts noch genauer an die tatsächlichen Gegebenheiten angepasst sind.

Eine Anpassung einer Zuordnungsregel kann z.B. darin bestehen, dass die der jeweiligen Zuordnungsregel zugrundeliegende, geschätzte Auftrittswahrscheinlichkeit oder auch das Klassifikationsverfahren selbst oder beides geändert und damit an die aktuellen Gegebenheiten angepasst wird.

Besonders vorteilhaft an dem Erfassungssystem dieser Ausführungsform ist, dass die Datenverarbeitungseinheit, die Speichereinheit und die Analyseeinheit derart miteinander verbunden sind, dass eine Zuordnungsregel entsprechend der aktuell ermittelten Objektklasse angepasst wird und über die Speichereinheit die angepasste Zuordnungsregel für die Ermittlung zukünftiger Objektklassen durch die Datenverarbeitungseinheit zur Verfügung steht. Auf diese Weise löst die Analyseeinheit nach jeder Klassifikation eines Objekts einen Lernvorgang des Erfassungssystems aus, so dass dieses zukünftig zu klassifizierende Objekte noch genauer klassifizieren kann. Vorzugsweise werden die Zuordnungsregeln zu einem Beginn eines Betriebs des Erfassungssystems als initiale Zuordnungsregeln vorgegeben, die auf Erfahrungswerten beruhende Objektwahrscheinlichkeiten widerspiegeln, die unabhängig von den Situationsparametern sind. Ausgehend von einer solchen Anfangssituation werden die Zuordnungsregeln abhängig von dem vorliegenden Situationsparameter an die tatsächlich bei diesem Situationsparameter, wie beispielsweise einer Bus-Haltestelle, vorliegende Wahrscheinlichkeit für das Erfassen eines Objekts der ermittelten Objektklasse angepasst.

Das Anpassen der Zuordnungsregel erfolgt vorzugsweise durch ein deterministisches Verfahren. Durch das deterministische Verfahren wird aus den Zählerinformationen und den Situationsparametern explizit eine neue Zuordnungsregel aus einer ursprünglich vorliegenden Zuordnungsregel bestimmt, die für die Datenverarbeitungseinheit abrufbar ist oder ihr übermittelt wird.

In einer Ausführungsform wird eine neue Zuordnungsregel implizit über ein adaptives Verfahren, z.B. ein neuronales Netzwerk, bestimmt. Diese Ausführungsform stellt eine Alternative zu einer deterministisch bestimmten Zuordnungsregel dar. Vorzugsweise werden hierbei der Strukturdatensatz und der Situationsparameter als Eingaben des neuronalen Netzwerks verwendet und als Ausgabe erfolgt eine Zuordnung einer Objektklasse. Dies kann durch eine Analyse von einer vorliegenden bedingten Wahrscheinlichkeit mit einem stochastischen Anteil erfolgen. Die Nutzung neuronaler Netzwerke für Lern- und Anpassungsprozesse ist grundsätzlich bekannt, so dass auf eine weiterführende diesbezügliche Beschreibung verzichtet wird.

In einer Ausführungsform liegen die Speichereinheit und die Analyseeinheit in einem erfindungsgemäßen Erfassungssystem ohne räumliche Trennung in einem einzigen Modul vor.

In einer alternativen Ausführungsform sind die Speichereinheit und/oder die Datenverarbeitungseinheit und/oder die Analyseeinheit vorteilhafterweise räumlich getrennt von der Sensoreinheit und der Auswerteeinheit. Eine Verbindung kann drahtlos erfolgen. Hierdurch kann die Auswerteeinheit mit der Sensoreinheit auch an einem nicht stationären Ort angebracht sein, wie beispielsweise in einem öffentlichen Verkehrsmittel, während beispielsweise die Analyseeinheit, die Speichereinheit und die Datenverarbeitungseinheit stationär angeordnet sein können.

In einer weiteren alternativen Ausführungsform sind die Sensoreinheit, die Auswerteeinheit und die Datenverarbeitungseinheit drahtlos mit der Speichereinheit und der Analyseeinheit verbunden. Dies ermöglicht die drahtlose Verbindung mehrerer Datenverarbeitungseinheiten, die auf eine zentrale Analyseeinheit und/oder Speichereinheit zuzugreifen.

Wenn die Datenverarbeitungseinheit zentral angeordnet ist und drahtlos mit mehreren Auswerteeinheiten verbunden ist, ist es vorteilhaft, wenn eine jeweilige Auswerteinheit ausgebildet ist, die Strukturdatensätze zusammen mit einer die Auswerteinheit, die Sensoreinheit oder z.B. das Fahrzeug, in das beide eingebaut sind, kennzeichnenden Kennung an die Datenverarbeitungseinheit zu übermitteln, damit die Datenverarbeitungseinheit die jeweilige Zählerinformation einer jeweiligen Auswerteeinheit oder einem jeweiligen Fahrzeug zuordnen kann, um die Zählerinformation für eine jeweilige Auswerteeinheit individuell zu bestimmen. Vorzugsweise ist die Datenverarbeitungseinheit ausgebildet, die jeweilige Zählinformation an eine jeweils zugehörige Auswerteeinheit rückzuübermitteln.

In Bezug auf die in diesem Fall erforderliche drahtlose Übertragung der Strukturdatensätze - z.B. von der Sensoreinheit erfasste zwei oder dreidimensionale Bilder - ist es vorteilhaft, wenn die Strukturdatensätze - also z.B. dreidimensionale Bilddaten - komprimiert sind.

Ziel der Kompression ist eine Verringerung der zu speichernden oder zu übertragenden Datenmenge durch die Entfernung von redundanten und nicht -relevanten Daten mittels effizienterer Kodierung der vorliegenden Informationen. In der Darstellung von 3D-Bildern entsteht Redundanz durch Vorgaben des Datenmodells, z.B. die Darstellung eines 12-bit-Datenraums in 16-bit Datenworten, und Wiederholungen, z.B. durch sich nicht verändernde Hintergründe in aufeinanderfolgenden Bildern. Nicht-relevante Informationen entstehen durch überkomplexe Repräsentation, z.B. eine zu hohe Auflösung in Teilbereichen des Bildes, implizite Instanziierung zugrundeliegender Modelle, z.B. die Darstellung eines Kreises als Punktwolke anstelle von Mittelpunkt und Durchmesser, und Rauschen, das im Aufnahme- und Verarbeitungsprozess in die Daten eingebracht wird, z.B. durch physikalische Effekte während der Aufnahme oder numerische Effekte während der Bildverarbeitung. Die Festlegung der Relevanz, also die Frage, welche Informationen relevant sind und welche nicht, muss in Bezug auf den Empfänger der Informationen geklärt werden. In Bezug auf Bildaufnahmen wird hierbei in der Regel das menschliche Sehen als Maßstab angesetzt und Kompressionsverfahren sind auf die menschliche Physiologie optimiert. Bei der Verarbeitung der 3D-Bilddaten in der Personenzählung ist die Eignung der Bilder für den Menschen nachrangig. Hier wird die Relevanz der Informationen für die Bildverarbeitung bewertet. Dabei können Modelle wie z.B. eine Abschätzung des Hintergrundes, Kenntnis über das Rauschverhalten und Formen bzw. Pfade erkannter und verfolgter Objekte einbezogen werden. Insbesondere Schritte der Vorverarbeitung fließen in die Kompression ein. Alle Verarbeitungsschritte, die nicht vor der Komprimierung ausgeführt werden können, sind Empfänger der komprimierten Daten. Für die drahtlose Übertragung der Strukturdatensätze wird daher die Komprimierung in Bezug auf diese Schritte optimiert. Um die Auswertung durch einen Betrachter (Referenzierung) weiterhin zu ermöglichen, werden in einem hybriden Ansatz einzelne Bilder um die Informationen angereichert, die für das Verständnis für den menschlichen Betrachter notwendig sind. Die Entscheidung, welches Bild angereichert wird, kann dabei statisch sein, also z.B. jedes Bild, ggf. mit einer Auslassung von dazwischenliegenden Bildern, oder dynamisch bei der Kompression mit Kenntnis des Inhalts entschieden werden. In der Folge ist das System in der Lage, den Datenkanal für die Übermittlung von dreidimensionalen Bildern zur Personenzählung optimal auszunutzen und gleichzeitig eine manuelle Referenzierung durch einen Benutzer zu ermöglichen.

Wenn die Datenverarbeitungseinheit, die Speichereinheit und die Analyseeinheit zentral vorgesehen sind, so dass die Auswerteeinheiten verschiedener Fahrzeuge auf diese zugreifen können, können die Fahrzeuge quasi voneinander lernen.

Auch wenn die Sensoreinheit, die Auswerteeinheit, die Datenverarbeitungseinheit und die Speichereinheit in einem jeweiligen Fahrzeug - und damit dezentral - vorhanden sind, können Datenverarbeitungseinheit und Speichereinheit dazu konfiguriert sein, Daten mit anderen Datenverarbeitungseinheiten und Speichereinheiten in andren Fahrzeugen auszutauschen, um auf diese Weise jeweils möglichst aktuelle Daten und/oder Zuordnungsregeln auszutauschen. Vorzugsweise sind jedoch zumindest die Sensoreinheit und die Auswerteeinheit sowie unter Umständen auch die Datenverarbeitungseinheit und die Speichereinheit lokal - also z.B. in einem jeweiligen Fahrzeug - vorgesehen, während zumindest die Analyseeinheit sowie unter Umständen auch die Datenverarbeitungseinheit und die Speichereinheit vorzugsweise zentral vorgesehen sind.

In einer bevorzugten Ausführungsform weist das Erfassungssystem wenigstens eine weitere Datenverarbeitungseinheit auf. Dabei sind die Speichereinheit und/oder die Analyseeinheit derart ausgebildet, dass sie auch eine drahtlose Verbindung zu der mindestens einen weiteren Datenverarbeitungseinheit des Erfassungssystems aufweisen. Bevorzugt ist die wenigstens eine weitere Datenverarbeitungseinheit räumlich getrennt von der Datenverarbeitungseinheit des Erfassungssystems angeordnet. Beispielsweise kann das Erfassungssystem zum Ermitteln von Objektklassen zu erfassender Objekte im öffentlichen Nahverkehr eingesetzt werden, wobei jede Datenverarbeitungseinheit des Erfassungssystems einem öffentlichen Verkehrsmittel zugeordnet ist. Vorteilhaft an dem Verwenden einer weiteren Datenverarbeitungseinheit ist das Empfangen einer größeren Anzahl von Zählerinformationen, wodurch häufig vorliegenden Situationsparametern eine besonders genaue Zuordnungsregel zugeordnet werden kann. Bei der drahtlosen Verbindung handelt es sich in Varianten dieser Ausführungsform um eine Verbindung aus einem GSM-, WLAN-, UMTS-, DECT-, LTE- oder NGMN-Netz.

In einer alternativen Ausführungsform ist die Analyseeinheit und/oder die Speichereinheit drahtgebunden mit der Datenverarbeitungseinheit verbunden. Hierdurch können die Zuordnungsregel und/oder andere Daten des Erfassungssystems besonders sicher und zuverlässig übertragen werden.

In einer besonders bevorzugten Ausführungsform umfasst die Gruppe von Objektklassen mehrere Objektklassen, nämlich mindestens eine Kombination aus den Objektklassen erwachsene Person, Kind, Haustier, Fahrrad, Kinderwagen, Rollstuhl, Koffer, oder Gehhilfe. Das Erfassungssystem gemäß dieser Ausführungsform ist besonders vorteilhaft, da es sich bei den angegebenen Objektklassen teilweise um besonders selten einem Objekt zuzuordnende Objektklassen handelt. Da die Zuordnung eines Objektes zu einer jeweiligen Objektklasse typischer Weise nicht eindeutig und korrekt erfolgen kann, ist es besonders für derartig seltene Objekte vorteilhaft, eine höhere Präzision bei der Objekterkennung zu ermöglichen. Die Ermittlung der Objekte entsprechend der Objektklassen dieser Ausführungsform kann vorteilhaft dafür verwendet werden, den Ort, an dem die Sensoreinheit angebracht ist, wie beispielsweise in öffentliches Verkehrsmittel, an eine eventuell erhöhte Nutzung durch Fahrräder, Rollstühle oder dergleichen anzupassen. Weiterhin kann das Erfassungssystem gemäß dieses Ausführungsbeispiels als Basis für ein automatisiertes Fahrscheinsystem für Fahrräder, Kinderwagen oder dergleichen genutzt werden, durch das Fahrräder, Kinderwagen oder dergleichen automatisiert erkannt werden.

In einer besonders bevorzugten Ausführungsform sind die Situationsparameter Werte, die z.B. einen aktuellen Wochentag, eine aktuelle Jahreszeit, eine aktuelle Uhrzeit, aktuelle Wetterdaten, Feiertage, Ferien, Nutzung von Einstiegsrampen, einen aktuellen Ort der Sensoreinheit, eine aktuelle Haltestelle eines mit dem Erfassungssystem ausgestatteten Transportmittels, ein einseitiges Absenken des Transportmittels und/oder eine Eingangsinformation kennzeichnen. Die Eingangsinformation gibt an, ob beispielsweise ein Rollstuhl-freundlicher Eingang oder ein Eingang eines Fahrradabteils vorliegt. Die Auswahl der Situationsparameter in dieser Ausführungsform führt zu einer vorteilhaften Zuordnung von Situationsparameter und Zuordnungsregeln. So ist beispielsweise an einem Sommertag mit mehr Fahrrädern in einem öffentlichen Verkehrsmittel zu rechnen als an einem Wintertag, und in der Nähe einer Bildungsstätte ist mit mehr Fahrrädern zu rechnen als in einem Industriegebiet. Derartige Korrelationen können in Form von bedingten Wahrscheinlichkeiten zu einer genaueren Zuordnungsregel führen. Anstatt einer Gesamtwahrscheinlichkeit P(OK) für das Ermitteln einer bestimmten Objektklasse OK, wird in dem erfindungsgemäßen Erfassungssystem die bedingte Wahrscheinlichkeit P(OK|ZP) für das Ermitteln einer bestimmten Objektklasse OK bei Vorliegen des Situationsparameters ZP für die Zuordnungsregel verwendet. Die Zuordnungsregeln können folglich vorteilhaft für eine Auswertung der Korrelation von zu erfassenden Objekten und den Situationsparametern verwendet werden, also beispielsweise kann die Wahrscheinlichkeit bestimmt werden, dass ein Fahrrad an einer bestimmten Haltestelle in ein öffentliches Verkehrsmittel gebracht wird. In einer Variante dieses Ausführungsbeispiels werden mehrere Situationsparameter aus der Gruppe ausgewählt. Im Falle von mehreren Situationsparametern ergibt sich die bedingte Wahrscheinlichkeit P(OK|ZP1 & ZP2) für das Vorliegen einer bestimmten Objektklasse OK unter der Voraussetzung dass die Situationsparameter ZP1 und ZP2 beide vorliegen. Formal wird diese gebildet durch eine Multiplikation der jeweiligen bedingten Wahrscheinlichkeiten P(OK|ZP1) und P(OK|ZP2) für das Vorliegen eines einzelnen Situationsparameters, falls die beiden Situationsparameter ZP1 und ZP2 nicht miteinander korreliert sind. Auf diese Weise kann aus den beiden den Situationsparametern ZP1 und ZP2 zugeordneten Zuordnungsregeln eine kombinierte Zuordnungsregel für das Erfassen eines Objekts bei Vorliegen beider Situationsparameter bestimmt und angewendet werden.

In einer weiteren Ausführungsform ist die Datenverarbeitungseinheit weiterhin ausgebildet, den aktuellen Situationsparameter von einem externen Gerät zu empfangen. In dieser Ausführungsform weist das Erfassungssystem vorzugsweise eine Empfangseinheit auf, die ausgebildet ist, ein den aktuellen Situationsparameter anzeigendes Situationssignal von dem externen Gerät zu empfangen. In einer Variante dieser Ausführungsform ist das externe Gerät über eine Steckverbindung mit der Datenverarbeitungseinheit verbunden. In einer alternativen Variante dieses Ausführungsbeispiels ist das externe Gerät drahtlos mit der Datenverarbeitungseinheit verbunden, beispielsweise durch einen Austausch eines NFC-, ZigBee-, WLAN- oder Bluetooth-Signals.

In einer zu der vorherigen Ausführungsform alternativen Ausführungsform weist das Erfassungssystem weiterhin eine Lokalisierungseinheit auf, die ausgebildet ist, eine Ortsinformation, die den aktuellen Ort der Sensoreinheit ausgibt, zu erzeugen, daraus einen Situationsparameter zu bestimmen und an die Datenverarbeitungseinheit auszugeben. Die Lokalisierungseinheit ist beispielsweise ein GPS-Gerät.

In einer bevorzugten Ausführungsform repräsentiert der Strukturdatensatz für einen jeweiligen Zeitpunkt eine Punktwolke, die ihrerseits eine geometrische Struktur des jeweils erfassten Objekts widerspiegelt. Dies erfolgt beispielsweise durch Ausgabe einer Anzahl von Punktkoordinaten der geometrischen Struktur. Die Punktkoordinaten geben eine Lage von Oberflächenpunkten der erfassten geometrischen Struktur relativ zueinander an. Durch das Anzeigen einer geometrischen Struktur kann besonders sicher zwischen einer Person und einem nicht belebten Objekt, wie beispielsweise einem Fahrrad oder einem Kinderwagen, unterschieden werden. Weiterhin kann die geometrische Struktur durch ein Erfassen von zwei- oder dreidimensionalen Abmessungen des zu erfassenden Objekts angezeigt werden.

Die Datenverarbeitungseinheit ist vorzugsweise ausgebildet, im Laufe der Zeit aufeinanderfolgende Strukturdatensätze dahingehend auszuwerten, dass die Datenverarbeitungseinheit die Bewegung eines oder mehrerer durch die Strukturdatensätze repräsentierten Objekte zu erfassen und zu verfolgen. Dies erlaubt es, dass das Erfassungssystem in bevorzugten Ausführungsvarianten dazu konfiguriert sein kann, ein Umkehren von Personen oder Objekten im Erfassungsbereich der Sensoreinheit zu erkennen und /oder eine Zählerinformation nur dann zu generieren, wenn ein Objekt oder eine Person den Erfassungsbereich tatsächlich durchschreitet. Die Erfassungseinheit kann in weiteren Ausführungsvarianten zusätzlich auch dazu ausgebildet sein, Objekte und Personen, die sich zu einem jeweiligen Zeitpunkt im Erfassungsbereich der Sensoreiniet befinden, zu zählen. Letzere Variante kann dann, wenn der Erfassungsbereich der Sensoreinheit ein Bereich vor oder hinter einer Tür ist, dazu genutzt werden, zu erfassen, ob der Türraum frei ist und die Tür gefahrlos geschlossen werden kann.

In einer Ausführungsform stellt der Strukturdatensatz eine dreidimensionale Matrix dar. Diese Ausführungsform ermöglicht eine besonders einfache Integration von bekannten Sensoreinheiten und Auswerteeinheiten in das erfindungsgemäße Erfassungssystem. Auswerteeinheiten, deren ausgegebener Strukturdatensatz eine dreidimensionale Matrix darstellt, sind allgemein bekannt, so dass auf eine ausführliche Darstellung von deren möglicher Realisierung im Weiteren verzichtet wird.

In einer bevorzugten Ausführungsform erfolgt die Bestimmung des Strukturdatensatzes über einen Time-of-Flight-Sensor. Die Auswerteeinheit überträgt typischerweise über 1000 Pixel pro Zeitschritt, bevorzugt über 10000 Pixel pro Zeitschritt.

In einer weiteren Ausführungsform ist die Datenverarbeitungseinheit weiterhin ausgebildet, die Zählerinformation an eine Nutzerschnittstelle auszugeben, so dass einem Nutzer des Erfassungssystems das Vorliegen eines Objekts der ermittelten Objektklasse angezeigt wird. Das Erfassungssystem gemäß dieser Ausführungsform ermöglicht vorteilhaft die Kontrolle der ermittelten Objektklasse durch einen Nutzer. Hierdurch kann vorteilhaft die Fehlerquote des Erfassungssystems abgeschätzt werden. Die Nutzerschnittstelle erlaubt außerdem eine zentrale Auswertung aller Objekte, die innerhalb eines bestimmten Zeitraums durch die Auswerteeinheit erfasst wurden. Vorzugsweise ermöglicht die Nutzerschnittstelle eine statistische Erhebung über das Vorliegen von Objekten einer bestimmten Objektklasse innerhalb eines bestimmten Zeitraums.

In einer Ausführungsform ist das Erfassungssystem ausgebildet, in einem Transportmittel angeordnet zu sein, wobei die zu erfassenden Objekte mit dem Transportmittel transportiert werden. Vorzugsweise handelt es sich bei dem Transportmittel um ein öffentliches Verkehrsmittel. In einer besonders bevorzugten Variante dieses Ausführungsbeispiels weist das Erfassungssystem neben der Datenverarbeitungseinheit mindestens eine weitere Datenverarbeitungseinheit auf, wobei die weitere Datenverarbeitungseinheit in einem weiteren Transportmittel angeordnet ist. Vorzugsweise weist das Erfassungssystemen dieses Ausführungsbeispiels eine Analyseeinheit, eine Speichereinheit, eine Vielzahl von Sensoreinheiten, eine Vielzahl von Auswerteeinheiten und eine Vielzahl von Datenverarbeitungseinheiten auf, wobei in jeweils einem Transportmittel aus einer Vielzahl von Transportmitteln eine Sensoreinheit, eine Auswerteeinheit und eine Datenverarbeitungseinheit angeordnet sind. Durch ein derart angeordnetes Erfassungssystem kann das Vorhandensein seltene Objekte, wie beispielsweise Fahrräder und Kinderwagen, in der Vielzahl von Transportmitteln mit einer besonders geringen Fehlerquote und daher besonders präzise bestimmt werden. Ein derartiges Erfassungssystem kann als Grundlage für ein Bezahlsystem in der Vielzahl von Transportmitteln dienen. Weiterhin kann das Erfassungssystem das Vorhandensein von Objekten mit einer vorbestimmten Objektklasse kontrollieren.

In anderen Varianten ist das Erfassungssystem ausgebildet, in einem Gebäude, oder einer Plattform z. B. in Türräumen oder Zugangsbereichen angeordnet zu werden.

Gemäß einem zweiten Aspekt der Erfindung wird zur Lösung der oben genannten Aufgabe ein Berechtigungsprüfsystem vorgeschlagen.

Das Berechtigungsprüfsystem weist ein Erfassungssystem gemäß dem ersten Aspekt der Erfindung und eine Nutzereingabeeinheit auf, die ausgebildet ist, von einem Nutzer des Berechtigungsprüfsystems eine Berechtigungsinformation zu empfangen. Das Erfassungssystem ist dabei weiterhin ausgebildet, aus einem Vergleich zwischen empfangener Berechtigungsinformation und ermittelter Objektklasse zu bestimmen, ob für ein Objekt der ermittelten Objektklasse eine Berechtigung vorliegt, und falls keine Berechtigung vorliegt, ein Warnsignal auszulösen

Das Berechtigungsprüfsystem gemäß dem zweiten Aspekt der Erfindung ermöglicht vorteilhaft eine automatisierte Berechtigungsprüfung. Dies ist insbesondere dann vorteilhaft, wenn verschiedene Objektarten, wie beispielsweise Person und Fahrrad, über verschiedene Berechtigungen verfügen müssen.

Unter Berechtigungsinformation ist im Weiteren ein Datensatz zu verstehen, der anzeigt, dass ein bestimmtes Objekt oder eine bestimmte Objektart über eine Berechtigung verfügen. Der Datensatz ist in Ausführungsformen des Berechtigungsprüfsystems ein automatisiert von einem an dem Objekt angeordneten Gerät ausgegebene Datensatz. In einer weiteren Ausführungsform wird der Datensatz durch eine von dem Nutzer an der Nutzereingabeeinheit eingegebene Tastendruckfolge gebildet.

In einer Ausführungsform des erfindungsgemäßen Berechtigungsprüfsystems wird das Warnsignal durch ein visuelles Signal, durch ein akustisches Signal, oder durch ein an ein externes Gerät ausgegebenes elektronisches Signal gebildet.

Gemäß einem dritten Aspekt der Erfindung wird zur Lösung der oben genannten Aufgabe ein Verfahren zum Betreiben eines Erfassungssystems vorgeschlagen.

Das Verfahren weist dabei die folgenden Schritte auf:
- Speichern einer Anzahl von Zuordnungsregeln, die jeweils einem Situationsparameter aus einem Satz vorbestimmter Situationsparameter zugeordnet sind;
- Abgeben elektromagnetischer Strahlung;
- Detektieren einer von einem Objekt ausgehenden Strahlung;
- Bestimmen eines Strukturdatensatzes aus einem Zeitverlauf der detektierten Strahlung;
- Zugreifen auf den Strukturdatensatz und auf einen aktuellen Situationsparameter sowie die dem aktuellen Situationsparameter zugeordnete Zuordnungsregel, und Ermitteln einer Objektklasse aus dem Strukturdatensatz, auf Basis der dem aktuellen Situationsparameter zugeordneten Zuordnungsregel, wobei die Objektklasse aus einer Gruppe von Objektklassen ausgewählt ist, die zumindest eine Unterscheidung ermöglicht, ob das Objekt eine Person ist oder nicht;
- Ausgeben einer das Vorliegen eines Objekts der ermittelten Objektklasse anzeigenden Zählerinformation.

Das Verfahren gemäß dem zweiten Aspekt der Erfindung erlaubt eine Situationsabhängige Bestimmung der vorliegenden Objektklasse, wodurch die Genauigkeit des mit dem Verfahren betriebenen Erfassungssystems erhöht wird.

In einer besonders bevorzugten Ausführungsform umfasst das erfindungsgemäße Verfahren weiterhin ein Anpassen der gespeicherten dem Situationsparameter zugeordneten Zuordnungsregel, abhängig von der Zählerinformation und dem aktuellen Situationsparameter. Diese Ausführungsform des Verfahrens gemäß dem dritten Aspekt der Erfindung ermöglicht ein automatisiertes Anpassen der Zuordnungsregel entsprechend der in der Vergangenheit ermittelten Objektklassen. Hierdurch kann beispielsweise anhand der bisher ermittelten Objektklassen eine Korrelation zwischen dem Vorhandensein bestimmter Objekte und dem Vorliegen eines bestimmten Situationsparameters bestimmt werden. In einer weiteren Ausführungsform werden die Schritte des Speicherns der Anzahl von Zuordnungsregeln und des Anpassens der gespeicherten Zuordnungsregeln räumlich getrennt von den weiteren Schritten des Verfahrens ausgeführt, wobei die dem aktuellen Situationsparameter zugeordnete Zuordnungsregel drahtlos zum Ermitteln der Objektklasse übertragen wird.

Die Erfindung soll nun anhand von Ausführungsbeispielen mit Bezug auf Figuren näher erläutert werden. Von diesen zeigen:
- Fig. 1a, b: ein erstes Ausführungsbeispiel (Fig. 1a) und ein zweites Ausführungsbeispiel (Fig. 1b) eines Erfassungssystems gemäß einem ersten Aspekt der Erfindung;
- Fig. 2: ein drittes Ausführungsbeispiel eines Erfassungssystems mit einer Vielzahl von Datenverarbeitungseinheiten gemäß dem ersten Aspekt der Erfindung;
- Fig. 3: ein Ausführungsbeispiel eines Berechtigungsprüfsystems gemäß einem zweiten Aspekt der Erfindung;
- Fig. 4a, b: ein erstes Ausführungsbeispiel (Fig. 4a) und ein zweites Ausführungsbeispiel (Fig. 4b) eines Verfahrens zum Betreiben eines Erfassungssystems gemäß einem dritten Aspekt der Erfindung.

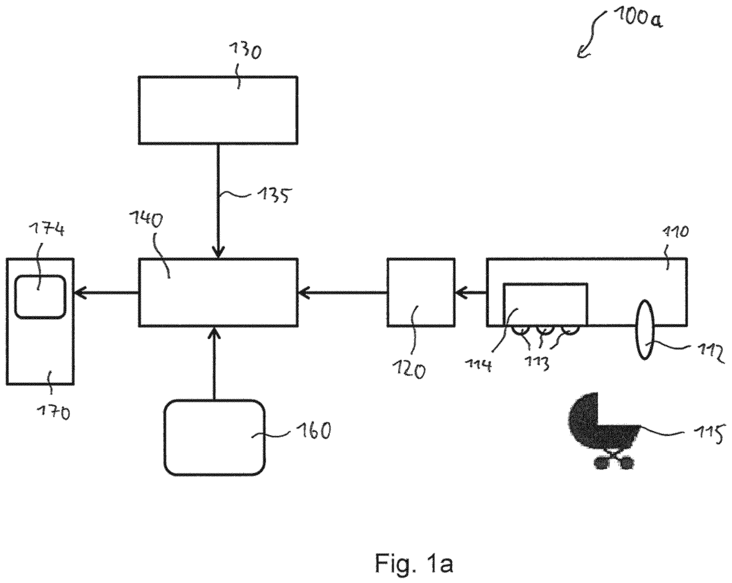

Fig. 1a zeigt ein erstes Ausführungsbeispiel eines Erfassungssystems 100a gemäß einem ersten Aspekt der Erfindung.

Das Erfassungssystem 100a weist eine Sensoreinheit 110, eine Auswerteeinheit 120, eine Speichereinheit 130 und eine Datenverarbeitungseinheit 140 auf.

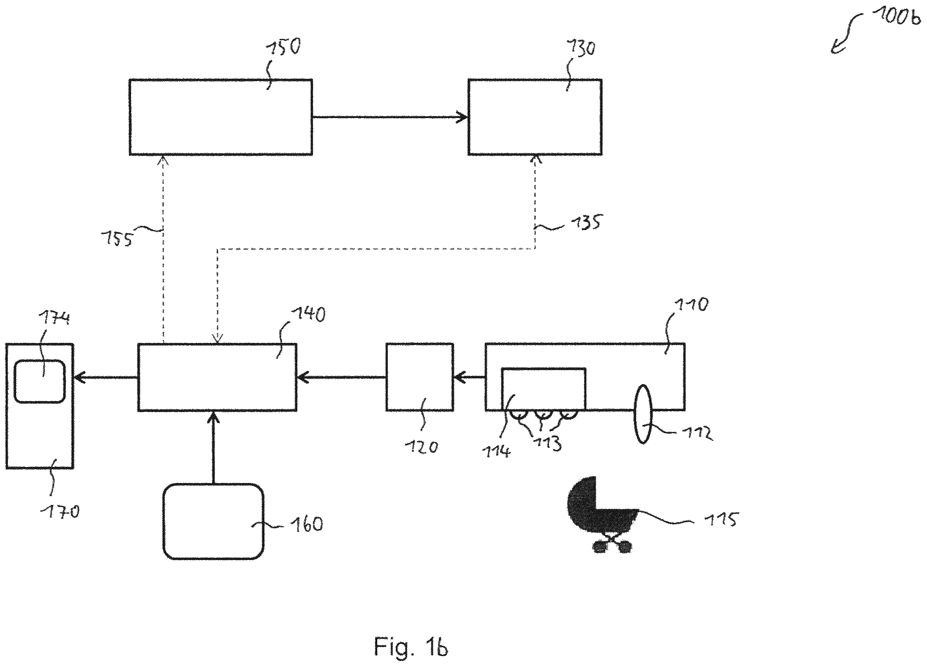

Die Sensoreinheit 110 umfasst eine Strahlungsquelle 112 zum Abgeben elektromagnetischer Strahlung und eine Sensoranordnung 114, die ausgebildet ist, von dem Objekt 115 reflektierte Strahlung zu detektieren. Das in dem Ausführungsbeispiel aus Fig. 1 zu erfassende Objekt 115 ist beispielhaft ein Kinderwagen. In dem vorliegenden Ausführungsbeispiel ist die Sensoreinheit ein Time-of-Flight (TOF) Sensor, der die Zeit detektiert, die die vom Objekt ausgehende Strahlung für die Wegstrecke von der Strahlungsquelle 112 zu dem Objekt 115 und zurück benötigt hat. Auf diese Weise wird ein Zeitverlauf der detektierten elektromagnetischen Strahlung gemessen. Es wird also eine zeitliche Abfolge von Messwerten des Time-of-Flight Sensors bestimmt. Die Sensoranordnung 114 umfasst im dargestellten Ausführungsbeispiel eine Anordnung von Fotodioden 113.

Die Auswerteeinheit 120 ist mit der Sensoreinheit 110 verbunden und ausgebildet, aus dem gemessenen Zeitverlauf der von der Sensoranordnung 114 detektierten Strahlung einen Strukturdatensatz des zu erfassen Objekt 115 zu bestimmen. Hierbei wird durch den Strukturdatensatz eine geometrische Struktur des zu erfassenden Objekts 115 angezeigt, wobei die Auswerteeinheit 120 in dem vorliegenden Ausführungsbeispiel ausgebildet ist, eine 3-dimensionale Matrix als Strukturdatensatz zu bestimmen.

Die Speichereinheit 130 ist räumlich getrennt von Sensoreinheit 110, Auswerteeinheiten 120 und Datenverarbeitungseinheit 140 angeordnet. Die Speichereinheit 130 weist eine drahtlose Verbindung 135 mit der Datenverarbeitungseinheit 140 auf. Sie ist ausgebildet, eine Anzahl von Zuordnungsregeln, von denen jede einem Situationsparameter aus einem Datensatz vorbestimmter Situationsparameter zugeordnet sind, zu speichern. Im vorliegenden Ausführungsbeispiel ist der Situationsparameter der aktuelle Ort der Sensoreinheit 110. In einem nicht dargestellten Ausführungsbeispiel sind die Situationsparameter Werte, die einen aktuellem Wochentag, aktuelle Wetterdaten, einen aktuellen Ort der Sensoreinheit und/oder eine aktuelle Haltestelle eines mit dem Erfassungssystem ausgestatteten Transportmittels kennzeichnen.

Das Erfassungssystem 100a aus Fig. 1a ist in einem aus Gründen der Übersichtlichkeit nicht dargestellten Bus angeordnet. Der Situationsparameter betreffend den aktuellen Ort der Sensoreinheit 110 kennzeichnet die letzte Haltestelle, die durch den Bus angefahren wurde. Der Situationsparameter betreffend den aktuellen Ort wird von einem externen Gerät 160 an das Erfassungssystem 140 übermittelt. Im vorliegenden Ausführungsbeispiel ist das externe Gerät 160 drahtgebunden mit der Datenverarbeitungseinheit 140 verbunden.

Die Datenverarbeitungseinheit 140 ist ausgebildet, auf den Strukturdatensatz und einen aktuellen Situationsparameter sowie auf eine dem aktuellen Situationsparameter in der Speichereinheit 130 zugeordnete Zuordnungsregel zuzugreifen und aus dem Strukturdatensatz dem Objekt, auf Basis einer dem aktuellen Situationsparameter zugeordneten Zuordnungsregel, eine Objektklasse zuzuordnen, die zumindest anzeigt, ob das zu erfassende Objekt 115 eine Person ist oder nicht. Im vorliegenden Ausführungsbeispiel zählen zu den möglichen Objektklassen die Objektklassen erwachsene Person, Kind, Haustier, Fahrrad, Kinderwagen, Rollstuhl, Koffer, Gehhilfe. In einem nicht dargestellten Ausführungsbeispiel wird durch die Objektklasse lediglich unterschieden zwischen Person und Nicht-Person.

Weiterhin ist die Datenverarbeitungseinheit 140 ausgebildet, eine das Vorliegen eines Objekts der ermittelten Objektklasse kennzeichnende Zählerinformation auszugeben. Vorliegend wird weiterhin der aktuelle Situationsparameter zusammen mit der Zählerinformation ausgegeben. Hierdurch kann das Erfassungssystem gemäß dem ersten Ausführungsbeispiel das Bestimmen einer genauen Häufigkeitsverteilung unterstützen, aus der hervorgeht wie viele Personen, Kinderwägen, Fahrräder und/oder Rollstühle an einer jeweiligen Haltstelle des Busses hinzu gestiegen sind über einen bestimmten in der Vergangenheit liegenden Zeitraum. Zusätzlich ist das Erfassungssystem 100a des dargestellten Ausführungsbeispiels beispielhaft dazu ausgebildet, die Zählerinformation an eine Nutzerschnittstelle 170 auszugeben. Bei der Nutzerschnittstelle 170 handelt es sich im vorliegenden Ausführungsbeispiel um ein Ausgabegerät mit einem Display 174, durch welches einem Nutzer des Erfassungssystems 100a das Vorliegen eines Objekts der ermittelten Objektklasse angezeigt wird.

Fig. 1b zeigt ein zweites Ausführungsbeispiel eines Erfassungssystems 100b. Das zweite Ausführungsbeispiel des Erfassungssystems 100b umfasst das in Fig. 1a gezeigte Erfassungssystem 100a, wobei das Erfassungssystem 100b weiterhin eine Analyseeinheit 150 aufweist.

Die Analyseeinheit 150 des Erfassungssystems 100b ist mit der Datenverarbeitungseinheit 140 über eine drahtlose Verbindung 155 und mit der Speichereinheit 130 drahtgebunden verbunden. Sie ist ausgebildet von der Datenverarbeitungseinheit 140 den aktuellen Situationsparameter und die Zählerinformation zu empfangen und abhängig von dem aktuellen Situationsparameter und der Zählerinformation eine Anpassung der dem Situationsparameter zugeordneten Zuordnungsregel in der Speichereinheit 130 auszulösen.

Durch das erfindungsgemäße Erfassungssystem 100b gemäß dem zweiten Ausführungsbeispiel wird in Echtzeit die Zuordnungsregel zum Ermitteln der Objektklasse an in der Zählerinformation enthaltene Zähldaten angepasst. Durch die Abhängigkeit der verwendeten Zuordnungsregel von dem aktuellen Situationsparameter, wird eine kontextsensitive und daher genaue Klassifizierung von Objekten ermöglicht.

Die Zuordnungsregel weist in dem dargestellten Ausführungsbeispiel eine diskrete Wahrscheinlichkeitsverteilung auf, die aus den früheren Zählerinformationen für den aktuellen Situationsparameter, also der bisherigen Anzahl von Objekten einer jeweiligen Objektklasse, ermittelt wurde. Konkret ergibt sich in dem dargestellten Ausführungsbeispiel für jede Haltestelle des Busses eine Verteilung, die angibt, wie wahrscheinlich es ist, dass ein in den Bus gestiegenes zu erfassendes Objekt 115 eine Person, ein Haustier, ein Fahrrad, ein Kinderwagen, ein Rollstuhl, ein Koffer oder eine Gehhilfe ist. Unter Berücksichtigung dieses Kontextwissens wertet die Datenverarbeitungseinheit 140 den Strukturdatensatz aus. Hierbei sendet die Datenverarbeitungseinheit 140 an die Speichereinheit 130 den aktuellen Situationsparameter und empfängt im Gegenzug von der Speichereinheit 130 die dem aktuellen Situationsparameter zugeordnete Zuordnungsregel. Datenverarbeitungseinheiten, die aus einem Strukturdatensatz eine Objektklasse des zu erfassenden Objekts ermitteln, sind dem Fachmann bekannt, so dass auf die konkrete Funktionsweise der Datenverarbeitungseinheit 140 im Folgenden nicht eingegangen wird. In einer Variante des dargestellten Ausführungsbeispiels wird das Ergebnis einer solchen bekannten Datenverarbeitungseinheit entsprechend der diskreten Wahrscheinlichkeitsverteilung angepasst. Dies sei im Folgenden an einem Beispiel erläutert. Aus dem Strukturdatensatz ermittelt die Datenverarbeitungseinheit 140, dass das zu erfassende Objekt mit 30-prozentiger Wahrscheinlichkeit ein Kinderwagen ist. Das Erfassungssystem 100 weist einem zu erfassenden Objekt erst eine Objektklasse zu, wenn es mit über 50-prozentiger Wahrscheinlichkeit das richtige Ergebnis ist. Da sich an der Haltestelle ein Kindergarten befindet, wurde in der Vergangenheit von dem Erfassungssystem 100 an dieser Haltestelle, also für diesen Situationsparameter, besonders häufig die Objektklasse Kinderwagen ermittelt. Daher ergibt die diskrete Wahrscheinlichkeitsverteilung aus der Zuordnungsregel eine 2-prozentige Wahrscheinlichkeit, dass ein zu erfassendes Objekt an dieser Haltestelle ein Kinderwagen ist. Da 2 Prozent deutlich mehr ist als ein im Mittel bestimmter Wert von 0,4 Prozent für das Erfassen eines Kinderwagens, wird im Rahmen der Zuordnungsregel für die in diesem Beispiel verwendete Haltestelle ein Faktor 2 auf die Wahrscheinlichkeit, dass das zu erfassende Objekt ein Kinderwagen ist multipliziert. Der im Mittel bestimmte Wert von 0.4 Prozent stellt eine Objektwahrscheinlichkeit für das Objekt Kinderwagen dar, wobei das Erfassungssystem von diesem Wert ausgehend die entsprechende Zuordnungsregel derart angepasst hat, dass für den Haltestellenort als Situationsparameter der Wert 2 Prozent ermittelt wurde. Dies führt im Ergebnis dazu, dass die Datenverarbeitungseinheit aufgrund des Kontextwissens früherer Ermittlungen als Objektklasse Kinderwagen ermittelt, obwohl die Messung, beispielsweise aufgrund störender Lichtquellen, diesbezüglich nicht eindeutig war.

In einem nicht dargestellten Ausführungsbeispiel wird eine Anpassung der dem Situationsparameter zugeordneten Zuordnungsregel über ein neuronales Netzwerk realisiert. Eine Ausgabe der Zuordnungsregel ist hierbei implizit gegeben. Beispielsweise kann das neuronale Netzwerk auf einen Strukturdatensatz und den aktuellen Situationsparameter zugreifen und hierdurch dem Objekt eine Objektklasse zuordnen. Das erfindungsgemäße Erfassungssystem erfordert in diesem Sinne keine explizite Zuordnungsregel, sondern kann in diesem Ausführungsbeispiel durch Eingabe des Strukturdatensatzes und Ausgabe von Objektklasse auf eine implizite Zuordnungsvorschrift zugreifen.

Die Sensoreinheit 110 aus dem dargestellten Ausführungsbeispiel detektiert in diskreten Zeitschritten von weniger als einer Sekunde Strahlung und wertet die entsprechenden Daten aus. In einem nicht dargestellten Ausführungsbeispiel wird eine Detektion durch die Sensoreinheit durch das Abgeben eines Nutzersignals ausgelöst. Das Nutzersignal ist hierbei beispielsweise ein Tastendruck. In einem anderen nicht dargestellten Ausführungsbeispiel umfasst die Sensoreinheit weiterhin einen Bewegungsmelder, der, so wie er eine Bewegung detektiert, eine Detektion durch die Sensoranordnung der Sensoreinheit auslöst.

In einem nicht dargestellten Ausführungsbeispiel sind die Analyseeinheit und/oder die Speichereinheit drahtgebunden mit der Datenverarbeitungseinheit verbunden.

Das in Fig. 1a und Fig. 1b gezeigte Erfassungssystem 100a, 100b wird für die Erfassung von Objekten in einem Bus verwendet. Alternativ kann das Erfassungssystem auch an stationären Orten, wie etwa dem Eingang eines Gebäudes, einem Bahnhof oder einem Flughafen verwendet werden, oder in anderen Verkehrsmitteln, wie etwa einer Bahn, einem Flugzeug oder einem Schiff, wobei die Auswahl an zu unterscheidenden Objektklassen entsprechend typischer zu erfassende Objekte bereitgestellt wird.

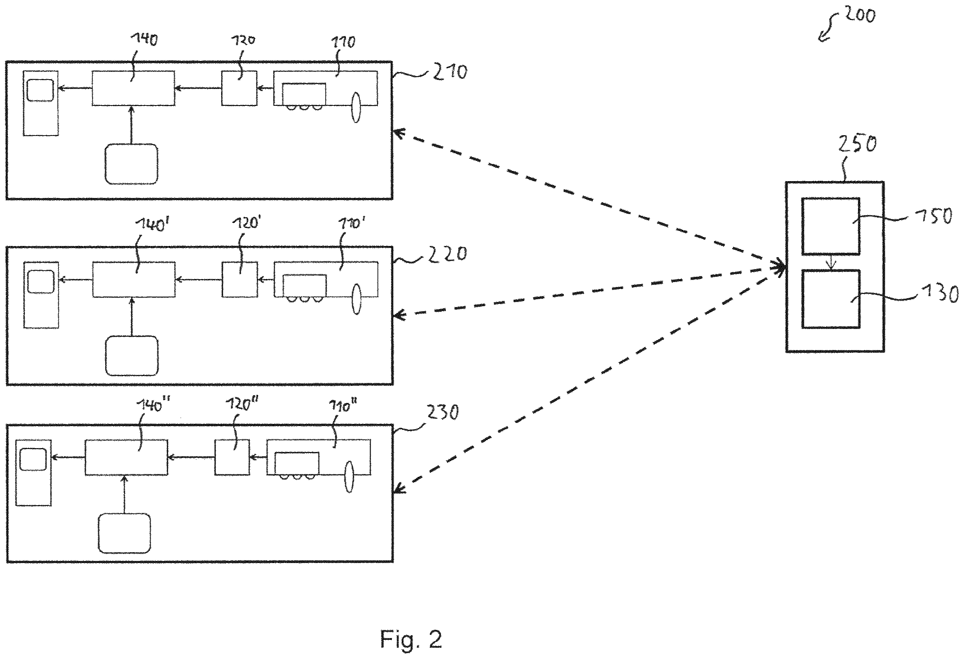

Fig. 2 zeigt ein drittes Ausführungsbeispiel eines Erfassungssystems 200 mit einer Vielzahl von Datenverarbeitungseinheiten 140, 140', 140" gemäß dem ersten Aspekt der Erfindung

Das Datenverarbeitungssystem 200 ist ähnlich zu den in Fig. 1a und 1b dargestellten Datenverarbeitungssystem 100a, 100b ausgebildet, wobei es zusätzlich zwei weitere Datenverarbeitungseinheiten 140', 140", Sensoreinheiten 110', 110" und Auswerteeinheiten 120', 120" aufweist.

Durch das erfindungsgemäße Datenverarbeitungssystem 200 werden Objekte in drei verschiedenen Bussen 210, 220, 230 erfasst, wobei die in der Speichereinheit 130 gespeicherten Zuordnungsregeln nach jedem Empfangen einer Zählerinformation angepasst werden. Die Verbindung von Datenverarbeitungseinheit 140, 140', 140" und Speichereinheit 130 und/oder Analyseeinheit 150 ist jeweils drahtlos. Durch die Nutzung mehrerer Busse 210, 220, 230 werden auch mehr Objekte erfasst, so dass die Situationsparameter-abhängigen Wahrscheinlichkeiten für das Vorliegen bestimmter Objektklassen genauer werden.

Speichereinheit 130 und Analyseeinheit 150 sind in dem in Fig. 2 dargestellten Ausführungsbeispiel in einem gemeinsamen stationären Zentralmodul 250 angeordnet. Grundsätzlich können Speichereinheit und Analyseeinheit in einem erfindungsgemäßen Erfassungssystem in einem einzigen Modul, beispielsweise innerhalb eines computergestützten Systems vorliegen. Das stationäre Zentralmodul 250 ist ein computergestütztes System, welches über eine Antennenanordnung zur drahtlosen Kommunikation über ein GSM-, WLAN-, UMTS-, DECT-, LTE- oder NGMN-Netz verfügt.

In einem nicht dargestellten Ausführungsbeispiel ist die Speichereinheit 130 weiterhin ausgebildet, Daten an eine zentrale Nutzerausgabe auszugeben, die die Zählerinformation für jede Objektklasse abhängig vom Situationsparameter anzeigen.

Entsprechend dem Erfassungssystem 200 kann die automatische Klassifizierung von Objekten für eine Vielzahl von Standorten der Sensoreinheit, also beispielsweise eine Vielzahl von öffentlichen Verkehrsmitteln, realisiert werden durch ein noch größeres Erfassungssystem.

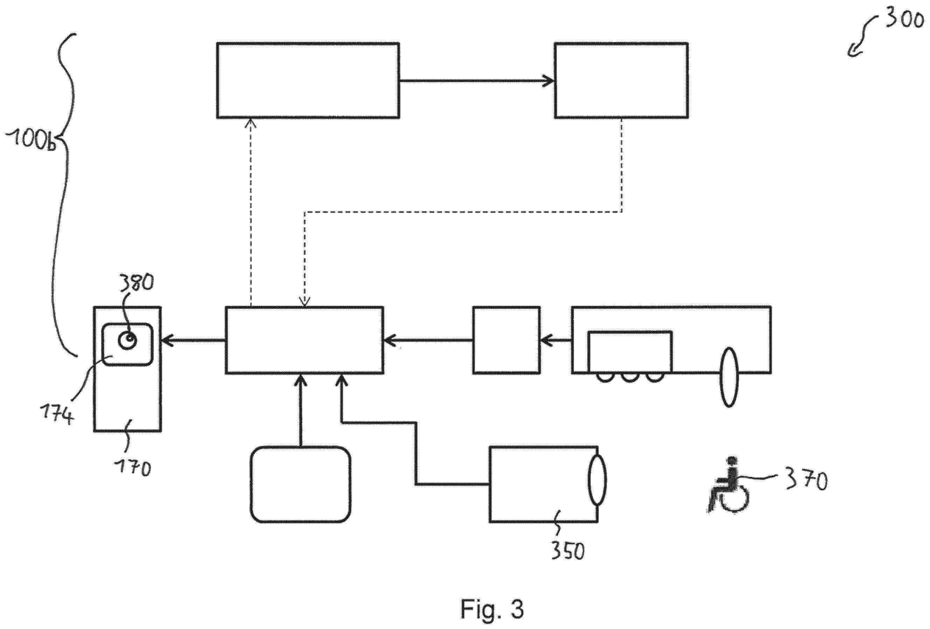

Fig. 3 zeigt ein Ausführungsbeispiel eines Berechtigungsprüfsystems 300 gemäß einem zweiten Aspekt der Erfindung.

Das Berechtigungsprüfsystem 300 weist das in Fig. 1b gezeigte Erfassungssystems 100b und eine Nutzereingabeeinheit 350 auf.

Die Nutzereingabeeinheit 350 ist ausgebildet, von einem Nutzer 370 des Berechtigungsprüfsystems 300 eine Berechtigungsinformation zu empfangen. In dem gezeigten Ausführungsbeispiel wird die Berechtigungsinformation als NFC-, ZigBee-, WLAN- oder Bluetooth-Signal empfangen. Das Signal wird dabei von einem tragbaren Elektrogerät der zu erfassenden Person oder der ein zu erfassendes Objekt begleitenden Person ausgegeben. Die Nutzereingabeeinheit 350 weist hierfür eine Empfangsvorrichtung 355 auf.

In einem nicht gezeigten Ausführungsbeispiel wird die Nutzereingabeeinheit von einer Stempelmaschine, einer Tastatur oder einem optischen Scanner gebildet.

Das Erfassungssystem 100b des Berechtigungsprüfsystems 300 ist weiter ausgebildet, aus einem Vergleich zwischen empfangener Berechtigungsinformation und Objektklasse zu bestimmen, ob für ein Objekt 370 der ermittelten Objektklasse eine Berechtigung vorliegt. Falls keine Berechtigung vorliegt, ist das Erfassungssystem 100b weiter ausgebildet, ein Warnsignal 380 auszulösen.

In dem dargestellten Ausführungsbeispiel wird das Warnsignal 380 durch die Nutzerschnittstelle 170 als optisches Signal über das Display 174 ausgegeben.

Vorzugsweise steht die Nutzerschnittstelle 170 einer überwachenden Person, wie beispielsweise einem Fahrer eines öffentlichen Verkehrsmittels zur Verfügung, insbesondere um die Berechtigung für mitgeführte seltene Objekte zu kontrollieren.

In nicht dargestellten Ausführungsbeispielen ist das Warnsignal ein akustisches oder ein elektrisches Signal.

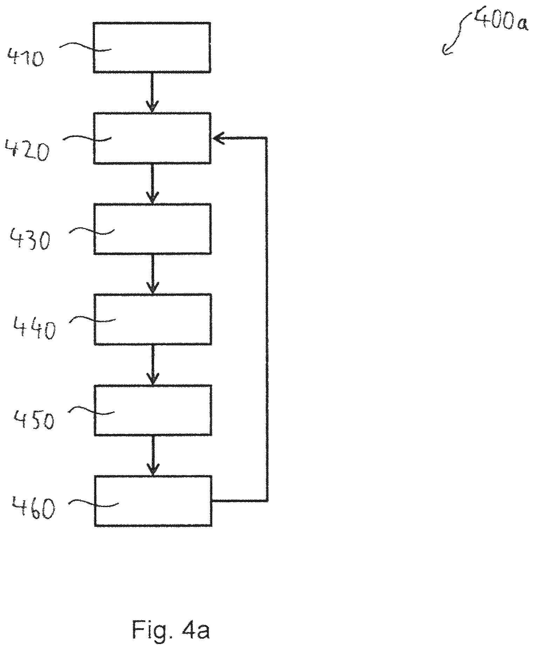

Fig. 4a zeigt ein erstes Ausführungsbeispiel eines Verfahrens 400a zum Betreiben eines Erfassungssystems gemäß einem dritten Aspekt der Erfindung.

Das Verfahren weist erfindungsgemäß die im Folgenden erläuterten Schritte auf.

Ein erster Schritt 410 umfasst ein Speichern einer Anzahl von Zuordnungsregeln, die jeweils einem Situationsparameter aus einem Satz vorbestimmter Situationsparameter zugeordnet sind.

In einem weiteren Schritt 420 wird elektromagnetischer Strahlung abgegeben.

Daraufhin folgt ein Detektieren von einem Objekt reflektierter Strahlung in einem nächsten Schritt 430.

In einem weiteren Schritt 440 wird ein Strukturdatensatz aus einem Zeitverlauf der detektierten Strahlung bestimmt.

In einem nächsten Schritt 450 des erfindungsgemäßen Verfahrens wird auf den Strukturdatensatz und einen aktuellen Situationsparameter zugegriffen, und es wird eine Objektklasse aus dem Strukturdatensatz, auf Basis einer dem aktuellen Situationsparameter zugeordneten Zuordnungsregel ermittelt.

Daraufhin erfolgt in einem weiteren Schritt 460 ein Ausgeben einer das Vorliegen eines Objekts der ermittelten Objektklasse kennzeichnende Zählerinformation.

Für das Erfassen eines weiteren Objekts und das Bestimmen der entsprechenden weiteren Objektklasse wird das erfindungsgemäße Verfahren ab Schritt 420 wiederholt, so dass die Schritte 420, 430, 440, 450, 460 in dieser Reihenfolge erneut ausgeführt werden.

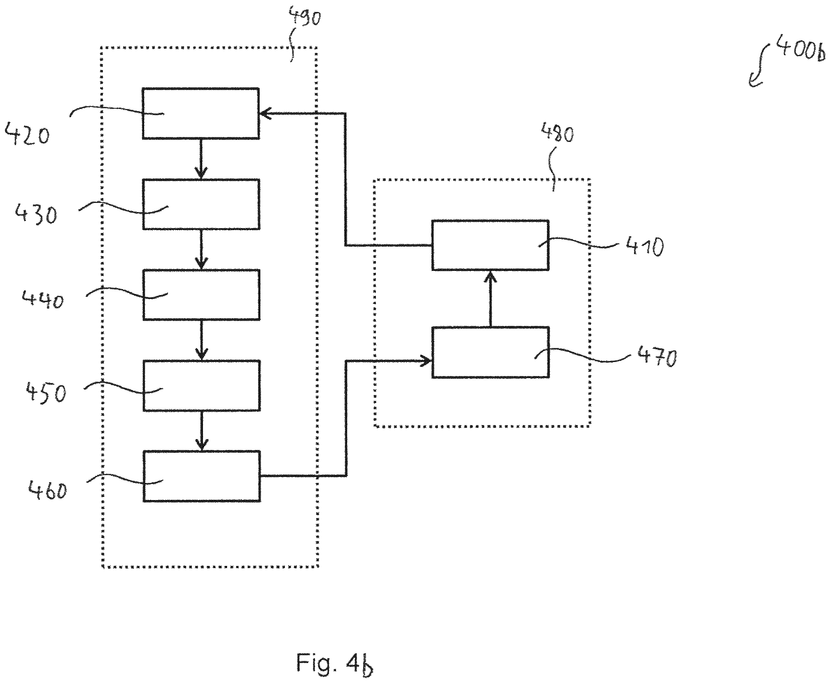

Ein zweites in Fig. 4b gezeigtes Ausführungsbeispiel des erfindungsgemäßen Verfahrens 400b umfasst ebenfalls die in Fig. 4a gezeigten Verfahrensschritte 410, 420, 430, 440, 450, 460. Weiterhin umfasst das in Fig. 4b gezeigte Verfahren den weiteren Verfahrensschritt 470. Dieser umfasst ein Anpassen der gespeicherten dem Situationsparameter zugeordneten Zuordnungsregel, abhängig von der Zählerinformation und dem aktuellen Situationsparameter.

Die Verfahrensschritte des Speicherns der Anzahl von Zuordnungsregeln 410 und des Anpassens der gespeicherten Zuordnungsregeln 470 werden im dargestellten Ausführungsbeispiel an einem ersten Ort 480 und die weiteren Verfahrensschritte an einem zweiten Ort 490 ausgeführt.

Nach dem Anpassen der Zuordnungsregel und deren Speicherung wird diese typischerweise für das Klassifizieren eines weiteren Objekts genutzt, so dass das erfindungsgemäße Verfahren 400b für jedes zu erfassende Objekt wiederholt ausgeführt wird.

### Bezuqszeichenliste:

- 100a, 100b, 200: Erfassungssystem
- 110, 110', 110": Sensoreinheit
- 112: Strahlungsquelle
- 114: Sensoranordnung
- 115: Objekt
- 120, 120', 120": Auswerteeinheit
- 130: Speichereinheit
- 135: drahtlose Verbindung zwischen Speichereinheit und Datenverarbeitungseinheit
- 140, 140', 140": Datenverarbeitungseinheit
- 150: Analyseeinheit
- 155: drahtlose Verbindung zwischen Analyseeinheit und Datenverarbeitungseinheit
- 160: externes Gerät
- 170: Nutzerschnittstelle
- 174: Display
- 210,220,230: Bus
- 250: stationäres Zentralmodul
- 300: Berechtigungsprüfsystem
- 350: Nutzereingabeeinheit
- 355: Empfangsvorrichtung
- 370: Nutzer
- 380: Warnsignal
- 400a, 400b: Verfahren
- 410, 420, 430, 440,450, 460, 470 4: Verfahrensschritte
- 480: erster Ort
- 490: zweiter Ort

## Patentansprüche

1. Erfassungssystem (100a) zum Klassifizieren eines Objekts (115) mit
- einer Sensoreinheit (110) mit einer Strahlungsquelle (112) zum Abgeben elektromagnetischer Strahlung und mit einer Sensoranordnung (114) zum Detektieren von vom Objekt reflektierter Strahlung;
- einer Auswerteeinheit (120) die mit der Sensoreinheit (110) verbunden und ausgebildet ist, aus der von der Sensoranordnung (114) detektierten Strahlung eine zeitlich geordnete Folge von Strukturdatensätzen des zu erfassenden Objekts (115) zu bestimmen;
- einer Speichereinheit (130) die ausgebildet ist eine Anzahl von Zuordnungsregeln, die jeweils einem Satz vorbestimmter Situationsparameter zugeordnet sind, zu speichern; und
- einer Datenverarbeitungseinheit (140) die mit der Speichereinheit verbunden ist ist,
**dadurch gekennzeichnet,**
**dass** die Datenverarbeitungseinheit (140) dazu ausgebildet ist
- auf den Strukturdatensatz und einen aktuellen Situationsparametersatz des Erfassungssystems (100 a) sowie auf wenigstens eine dem aktuellen Situationsparametersatz des Erfassungssystems (100 a) zugeordnete Zuordnungsregel zuzugreifen und das Objekt auf Basis der Strukturdatensätze unter Anwendung einer dem aktuellen Situationsparametersatz des Erfassungssystems (100 a) zugeordneten Zuordnungsregel einer Objektklasse zuzuordnen, wobei die Objektklasse aus einer Gruppe von Objektklassen ausgewählt ist, die zumindest eine Unterscheidung ermöglicht, ob das Objekt (115) eine Person ist oder nicht, und wobei die Datenverarbeitungseinheit (140) weiterhin ausgebildet ist, eine Zählerinformation auszugeben, die anzeigt, dass das Erfassungssystem ein Objekt (115) der ermittelten Objektklasse erfasst hat.

2. Erfassungssystem gemäß Anspruch 1, das weiterhin eine Analyseeinheit aufweist, die mit der Datenverarbeitungseinheit und der Speichereinheit verbunden ist und ausgebildet ist, auf den aktuellen Situationsparameter und die Zählerinformation zuzugreifen und abhängig von dem aktuellen Situationsparametersatz und der Zählerinformation eine Anpassung der dem Situationsparametersatz zugeordneten Zuordnungsregel in der Speichereinheit auszulösen.

3. Erfassungssystem gemäß Anspruch 1 oder 2, bei dem die Speichereinheit und/oder die Analyseeinheit über eine drahtlose Verbindung mit der Datenverarbeitungseinheit verbunden sind.

4. Erfassungssystem gemäß Anspruch 3, das wenigstens eine weitere Datenverarbeitungseinheit aufweist und bei dem die Speichereinheit und/oder die Analyseeinheit derart ausgebildet sind, dass sie auch eine drahtlose Verbindung zu der mindestens einen weiteren Datenverarbeitungseinheit des Erfassungssystems aufweist.

5. Erfassungssystem gemäß Anspruch 1 oder 2, bei dem die Analyseeinheit und/oder die Speichereinheit drahtgebunden mit der Datenverarbeitungseinheit verbunden ist.

6. Erfassungssystem gemäß einem der vorherigen Ansprüche, bei dem die Gruppe von Objektklassen mehrere Objektklassen umfasst, nämlich z.B. eine Kombination aus den Objektklassen Person, Haustier, Fahrrad, Kinderwagen, Rollstuhl, Koffer, oder Gehhilfe.

7. Erfassungssystem gemäß einem der vorherigen Ansprüche, bei dem die Situationsparameter Werte sind, die einen aktuellen Wochentag, eine aktuelle Jahreszeit, eine aktuelle Uhrzeit, aktuelle Wetterdaten, Feiertage, Ferien, Nutzung von Einstiegsrampen einen aktuellen Ort der Sensoreinheit, eine aktuelle Haltestelle eines mit dem Erfassungssystem ausgestatteten Transportmittels, ein einseitiges Absenken des Transportmittels und/oder eine Eingangsinformation kennzeichnen.

8. Erfassungssystem gemäß einem der vorherigen Ansprüche, bei dem die Datenverarbeitungseinheit weiterhin ausgebildet ist, den aktuellen Situationsparameter von einem externen Gerät zu empfangen.

9. Erfassungssystem gemäß einem der vorherigen Ansprüche, bei dem der Strukturdatensatz für einen jeweiligen Zeitpunkt eine Punktwolke repräsentiert.

10. Erfassungssystem gemäß einem der vorherigen Ansprüche, bei dem die Datenverarbeitungseinheit ausgebildet ist, im Laufe der Zeit aufeinanderfolgende Strukturdatensätze dahingehend auszuwerten, dass die Datenverarbeitungseinheit die Bewegung eines oder mehrerer durch die Strukturdatensätze repräsentierten Objekte zu erfassen und zu verfolgen.

11. Erfassungssystem gemäß einem der vorherigen Ansprüche, bei dem die Datenverarbeitungseinheit weiterhin ausgebildet ist, die Zählerinformation an eine Nutzerschnittstelle auszugeben, so dass einem Nutzer des Erfassungssystems das Vorliegen eines Objekts der ermittelten Objektklasse angezeigt wird.

12. Berechtigungsprüfsystem, aufweisend ein Erfassungssystem gemäß einem der Ansprüche 1 bis 11 und eine Nutzereingabeeinheit, die ausgebildet ist, von einem Nutzer des Berechtigungsprüfsystems eine Berechtigungsinformation zu empfangen, wobei das Erfassungssystem weiter ausgebildet ist, aus einem Vergleich zwischen empfangener Berechtigungsinformation und der ermittelten Objektklasse zu bestimmen, ob für ein Objekt der ermittelten Objektklasse eine Berechtigung vorliegt, und falls keine Berechtigung vorliegt, ein Warnsignal auszulösen.

13. Verfahren zum Betreiben eines Erfassungssystems (100 a), aufweisend die Schritte
- Speichern einer Anzahl von initialen Zuordnungsregeln, die jeweils einem Satz von Situationsparametern zugeordnet sind;
- Abgeben elektromagnetischer Strahlung;
- Detektieren einer von einem Objekt (115) reflektierten Strahlung;
- Bestimmen eines Strukturdatensatzes aus einem Zeitverlauf der detektierten Strahlung;
**dadurch gekennzeichnet,**
**dass** das Verfahren folgende Schritte aufweist:
- Zugreifen auf den Strukturdatensatz oder eine zeitliche Abfolge von Strukturdatensätzen und auf einen aktuellen Situationsparametersatz des Erfassungssystems (100 a) sowie die dem aktuellen Situationsparametersatz des Erfassungssystems (100 a) zugeordnete Zuordnungsregel, und Ermitteln einer Objektklasse aus dem Strukturdatensatz bzw. der zeitlichen Abfolge von Strukturdatensätzen, auf Basis der dem aktuellen Situationsparametersatz des Erfassungssystems (100 a) zugeordneten Zuordnungsregel, wobei die Objektklasse aus einer Gruppe von Objektklassen ausgewählt ist, die zumindest eine Unterscheidung ermöglicht, ob das Objekt (115) eine Person ist oder nicht;
- Ausgeben einer das Vorliegen eines Objekts (115) der ermittelten Objektklasse anzeigenden Zählerinformation.

14. Verfahren gemäß Anspruch 13, wobei ein zusätzlicher letzter Schritt ein Anpassen der gespeicherten dem Situationsparametersatz zugeordneten Zuordnungsregel, abhängig von der Zählerinformation und dem aktuellen Situationsparametersatz, umfasst.

15. Verfahren gemäß Anspruch 14, bei dem die Schritte des Speicherns der Anzahl von Zuordnungsregeln und des Anpassens der gespeicherten Zuordnungsregeln räumlich getrennt von den weiteren Schritten des Verfahrens ausgeführt werden, und wobei zum Ermitteln der Objektklasse drahtlos auf die dem aktuellen Situationsparameterabsatz zugeordnete Zuordnungsregel zugegriffen wird.

## Claims

1. Detection system (100 a) for classifying an object (115) comprising
- a sensor unit (110) with a radiation source (112) for emitting electromagnetic radiation and with a sensor assembly (114) for detecting radiation reflected by the object;
- an evaluation unit (120) which is connected to the sensor unit (110) and designed to determine, from the radiation detected by the sensor assembly (114), a temporal sequence of structure data sets of the object (115) to be detected;
- a memory unit (130) that is designed to store a number of association rules, each of which is associated with a set of predetermined situation parameters; and
- a data processing unit (140) that is connected to the memory unit,
**characterized in that** the data processing unit (140) is designed to
- access the structure data set and a current situation parameter set of the detection system (100 a), as well as at least one association rule associated with the current situation parameter set of the detection system (100 a), and
- to associate the object with an object class based on the structure data sets using an association rule associated with the current situation parameter set of the detection system (100 a),
- wherein the object class is selected from a group of object classes that allows at least a distinction whether the object (115) is a person or not, and
- wherein the data processing unit (140) is further designed to output counter information which indicates that the detection system has detected an object (115) of the determined object class.

2. Detection system according to claim 1, further comprising an analysis unit that is connected to the data processing unit and the memory unit and that is designed to access the current situation parameter and the counter information and to trigger, depending on the current situation parameter set and the counter information, an adjustment of the association rule associated with the situation parameter set in the memory unit.

3. Detection system according to claim 1 or 2, wherein the memory unit and/or the analysis unit is connected to the data processing unit by means of a wireless connection.

4. Detection system according to claim 3, which comprises at least one further data processing unit and in which the memory unit and/or the analysis unit is designed in such a way that it also features a wireless connection to the at least one further data processing unit of the detection system.

5. Detection system according to claim 1 or 2, in which the analysis unit and/or the memory unit is connected to the data processing unit by means of a wired connection.

6. Detection system according to one of the preceding claims, wherein the group of object classes comprises a plurality of object classes, namely e.g. a combination of the object classes person, pet, bicycle, stroller, wheelchair, suitcase, or walking aid.

7. Detection system according to one of the preceding claims, wherein the situation parameters are values characterizing a current day of the week, a current season, a current time, current weather data, holidays, vacation, use of boarding ramps, a current location of the sensor unit, a current stop of a means of transport equipped with the detection system, a one-sided lowering of the means of transport, and/or entry information.

8. Detection system according to one of the preceding claims, wherein the data processing unit is further designed to receive the current situation parameter from an external device.

9. Detection system according to one of the preceding claims, wherein the structure data set for a respective point in time represents a point cloud.

10. Detection system according to one of the preceding claims, wherein the data processing unit is designed to evaluate successive structure data sets over time such that the data processing unit detects and tracks the movement of one or several objects represented by the structure data sets.

11. Detection system according to one of the preceding claims, wherein the data processing unit is further designed to output the counter information to a user interface so that the presence of an object of the determined object class is indicated to a user of the detection system.

12. Authorization verification system, comprising a detection system according to one of claims 1 through 11 and a user input unit that is designed to receive authorization information from a user of the authorization verification system, wherein the detection system is further designed to determine, based on a comparison of received authorization information and the determined object class, whether an authorization exists for an object of the determined object class, and to trigger a warning signal if no authorization exists.

13. Method of operating a detection system (100 a), comprising the steps of
- storing a number of initial association rules, each of which is associated with a set of situation parameters;
- emitting electromagnetic radiation;
- detecting radiation reflected by an object (115);
- determining a structure data set from a temporal history of the detected radiation;
**characterized in that** the method comprises the following steps:
- Accessing the structure data set or a temporal sequence of structure data sets and a current situation parameter set of the detection system (100 a) as well as the association rule associated with the current situation parameter set of the detection system (100 a), and determining an object class from the structure data set or the temporal sequence of structure data sets based on the association rule associated with the current situation parameter set of the detection system (100 a), wherein the object class is selected from a group of object classes that allows at least a distinction whether or not the object (115) is a person;
- Outputting counter information indicating the presence of an object (115) of the determined object class.

14. Method according to claim 13, wherein an additional last step comprises an adjustment of the stored association rule associated with the situation parameter set depending on the counter information and the current situation parameter set.

15. Method according to claim 14, wherein the steps of storing the number of association rules and adjusting the stored association rules are performed spatially separately from the further steps of the method, and wherein the association rule associated with the current situation parameter set is accessed wirelessly for determining the object class.

## Revendications

1. Système (100a) de détection pour le classement d'un objet (115) comprenant
- une unité (110) formant capteur ayant une source (112) de rayonnement pour l'émission d'un rayonnement électromagnétique et ayant un agencement (114) de capteurs pour la détection du rayonnement réfléchi par l'objet ;
- une unité (120) d'exploitation reliée à l'unité (110) formant capteur et constituée pour déterminer, à partir du rayonnement détecté par l'agencement (114) de capteur, une succession ordonnée dans le temps, d'ensembles de données de structure de l'objet (115) à détecter ;
- une unité (130) de mémoire, qui est constituée pour mettre en mémoire un certain nombre de règles d'association, qui sont associées chacune à un ensemble de paramètres de situation définis à l'avance ; et
- une unité (140) de traitement de données, qui est reliée à l'unité de mémoire,
caractérisé en que l'unité (140) de traitement de données est constituée pour
- accéder à l'ensemble de données de structure et à un ensemble de paramètres de situation en cours du système (100a) de détection ainsi qu'à au moins une règle d'association associée à l'ensemble de paramètres de situation en cours du système (100a) de détection et
- associer, à une classe d'objets, l'objet sur la base des ensembles de données de structure en utilisant une règle d'association associée à l'ensemble des paramètres de situation en cours du système (100a) de détection, dans lequel la classe d'objets est choisie dans un groupe de classes d'objets, qui permet au moins de distinguer si l'objet (115) est une personne ou n'en n'est pas une ; et
- dans lequel l'unité (140) de traitement de données est constituée en outre pour donner une information de compteur, qui indique que le système de détection a détecté un objet (115) de la classe d'objets déterminée.

2. Système de détection suivant la revendication 1, qui a en outre une unité d'analyse, qui est reliée à l'unité de traitement de données et à l'unité de mémoire et qui est constituée pour accéder au paramètre de situation en cours et à l'information du compteur et pour déclencher dans l'unité de mémoire, en fonction de l'ensemble de paramètres de situation en cours et d'information du compteur, une adaptation de la règle d'association associée à l'ensemble de paramètres de situation.

3. Système de détection suivant la revendication 1 ou 2, dans lequel l'unité de mémoire et/ou l'unité d'analyse sont reliées par une liaison sans fil à l'unité de traitement de données.

4. Système de détection suivant la revendication 3, qui a au moins une autre unité de traitement de données et dans lequel l'unité de mémoire et/ou l'unité d'analyse sont constituées de manière à avoir également une liaison sans fil avec la au moins une autre unité de traitement de données du système de détection.

5. Système de détection suivant la revendication 1 ou 2, dans lequel l'unité d'analyse et/ou l'unité de mémoire sont reliées par fil à l'unité de traitement de données.

6. Système de détection suivant l'une des revendications précédentes, dans lequel le groupe de classes d'objets comprend plusieurs classes d'objets, à savoir par exemple une combinaison des classes d'objets personne, animal domestique, bicyclette, voiture d'enfants, chaise roulante, valise ou déambulateur.

7. Système de détection suivant l'une des revendications précédentes, dans lequel les paramètres de situation sont des valeurs qui caractérisent un jour de la semaine en cours, une saison en cours, une heure en cours, des données météorologiques en cours, des jours de fêtes, des jours fériés, l'utilisation de rampes d'accès d'un emplacement actuel de l'unité formant capteur, un point d'arrêt en cours d'un moyen de transport équipé du système de détection, un abaissement d'un côté du moyen de transport et/ou une information d'entrée.

8. Système de détection suivant l'une des revendications précédentes, dans lequel l'unité de traitement de données est constituée en outre pour recevoir le paramètre de situation en cours d'un appareil extérieur.

9. Système de détection suivant l'une des revendications précédentes, dans lequel l'ensemble de données de structure représente un nuage de points pour un instant respectif.

10. Système de détection suivant l'une des revendications précédentes, dans lequel l'unité de traitement de données est constituée pour exploiter des ensembles de données de structure se succédant au cours du temps, en ce que l'unité de traitement de données est constituée pour détecter et suivre le mouvement d'un ou plusieurs objets représentés par les ensembles de données de structure.

11. Système de détection suivant l'une des revendications précédentes, dans lequel l'unité de traitement de données est constituée en outre pour donner l'information du compteur à une interface d'utilisateur de manière à ce que la présence d'un objet de la classe d'objets déterminée soit indiquée à un utilisateur du système de détection.

12. Système de contrôle d'une autorisation, comportant un système de détection suivant l'une des revendications 1 à 11 et une unité d'entrée d'utilisateur, qui est constituée pour recevoir une information d'autorisation d'un utilisateur du système de contrôle d'une autorisation, dans lequel le système de détection est constitué en outre pour déterminer, à partir d'une comparaison entre une information d'autorisation reçue et la classe d'objets déterminée, si il y a pour un objet de la classe d'objets déterminée une autorisation et pour déclencher un signal d'alerte s'il n'y a pas d'autorisation.

13. Procédé pour faire fonctionner un système (100a) de détection comportant les stades
- mise en mémoire d'un nombre de règles initiales d'association, qui sont associées respectivement à un ensemble de paramètres de situation ;
- émission d'un rayonnement électromagnétique ;
- détection d'un rayonnement réfléchi par un objet (115) ;
- détermination d'un ensemble de données de structure à partir d'une courbe en fonction du temps du rayonnement détecté ; **caractérisé**
**en ce que** le procédé a les stades suivants :
- accès à l'ensemble de données de structure ou à une succession dans le temps d'ensembles de données de structure et à un ensemble de paramètres de situation en cours du système (100a) de détection ainsi qu'à la règle d'association associée à l'ensemble de paramètres de situation en cours du système (100a) de détection et détermination d'une classe d'objets, à partir de l'ensemble de données de structure ou de la succession dans le temps des ensembles de données de structure, sur la base de la règle d'association associée à l'ensemble de paramètres de situation en cours du système (100a) de détection, dans lequel la classe d'objets est choisie dans un groupe de classes d'objets, qui permet de distinguer si l'objet (115) est une personne ou n'en n'est pas une ;
- émission d'une information de compteur indiquant la présence d'un objet (115) de la classe d'objets déterminée.

14. Procédé suivant la revendication 13, dans lequel un dernier stade supplémentaire comprend une adaptation de la règle d'association, associée à l'ensemble de paramètres de situation et mise en mémoire, en fonction d'une information de compteur et de l'ensemble de paramètres de situation en cours.

15. Procédé suivant la revendication 14, dans lequel on réalise les stades de la mise en mémoire du nombre de règles d'association et de l'adaptation des règles d'association mises en mémoire de manière séparée dans l'espace des autres stades du procédé et dans lequel, pour la détermination de la classe d'objets, on accède sans fil à la règle d'association associée à l'ensemble de paramètres de situation en cours.
